## Europäisches Patentamt

(19) **European Patent Office**

(11) Veröffentlichungsnummer: **0 144 558**

**Office européen des brevets**

**B1**

(12)

# EUROPÄISCHE PATENTSCHRIFT

(45) Veröffentlichungstag der Patentschrift:
**13.01.88**

(51) Int. Cl.⁴: **H 04 L 25/49**

(21) Anmeldenummer: **84110664.4**

(22) Anmeldetag: **07.09.84**

(54) **CMI-Codierer.**

(30) Priorität: **17.11.83 DE 3341495**

(43) Veröffentlichungstag der Anmeldung:
**19.06.85 Patentblatt 85/25**

(45) Bekanntmachung des Hinweises auf die Patenterteilung:
**13.01.88 Patentblatt 88/2**

(84) Benannte Vertragsstaaten:
**DE FR GB IT**

(56) Entgegenhaltungen:
**EP-A-0 063 886**
**DE-A-3 031 579**
**DE-B-2 712 974**

(73) Patentinhaber: **ANT Nachrichtentechnik GmbH, Gerberstrasse 33, D-7150 Backnang (DE)**

(72) Erfinder: **Bredemeier- Klonki, Volker, Dipl.- Ing., Königsberger Strasse 36, D-7155 Oppenweiler (DE)**
Erfinder: **Annecke, Karl- Heinz, Dr. Ing., Nansenstrasse 25/2, D-7150 Backnang (DE)**

(74) Vertreter: **Wiechmann, Manfred, Dipl.- Ing., ANT Nachrichtentechnik GmbH Gerberstrasse 33 Postfach 11 20, D-7150 Backnang (DE)**

LIBER, STOCKHOLM 1988

## Beschreibung

Die Erfindung betrifft einen CMI-Codierer (Code-Mark-Inversion) gemäß Oberbegriff des Patentanspruchs 1.

Ein solcher CMI-Codierer ist aus der DE-C-30 31 579 bekannt, wobei in aufwendiger Art taktgesteuerte Flip-Flops und logische Verknüpfungsglieder verwendet werden. Bei diesem CMI-Codierer werden die Ausgangssignale der Flip-Flops teilweise mit dem Takt verknüpft, wodurch zeitkritische Pfade entstehen, die zu einer fehlerhaften Codierung bei hohen Taktgeschwindigkeiten führen können. Außerdem ist die Spike-Unterdrückung nicht vollständig, was sich an den Nahtstellen beim Zusammenfügen der Binär-1-Signale äußert.

Durch das deutsche Patent DE-C-33 24 820 ist ein Verfahren bzw. eine Schaltungsanordnung zur Bildung eines CMI-Codes vorgeschlagen worden, wobei eine Verzögerungsschaltung mit einer Verzögerungszeit von etwa einer halben Taktperiode verwendet wird. Ein solcher CMI-Codierer muß entsprechend der zu übertragenden Bitrate abgeglichen werden.

Aus der deutschen Auslegeschrift DE-A-27 12 974 ist ein CMI-Codierer von der Gattung des Anmeldungsgegenstandes bekannt, wobei ebenfalls ein Verzögerungsglied eingesetzt ist.

Aufgabe der vorliegenden Erfindung war es daher, einen CMI-Codierer der obigen Art anzugeben, der keine zeitkritischen Signalpfade aufweist, der Spikes wirksam zu unterdrücken vermag, der wenig Schaltungsaufwand benötigt, der auch bei sehr hohen Taktgeschwindigkeiten fehlerfrei arbeitet und der eine Verzögerungsschaltung, die abzugleichen ist, nicht benötigt.

Die Aufgabe wird gelöst durch die kennzeichnenden Merkmale des Patentanspruchs 1. Vorteilhafte Ausgestaltungen der Erfindung bilden die Unteransprüche.

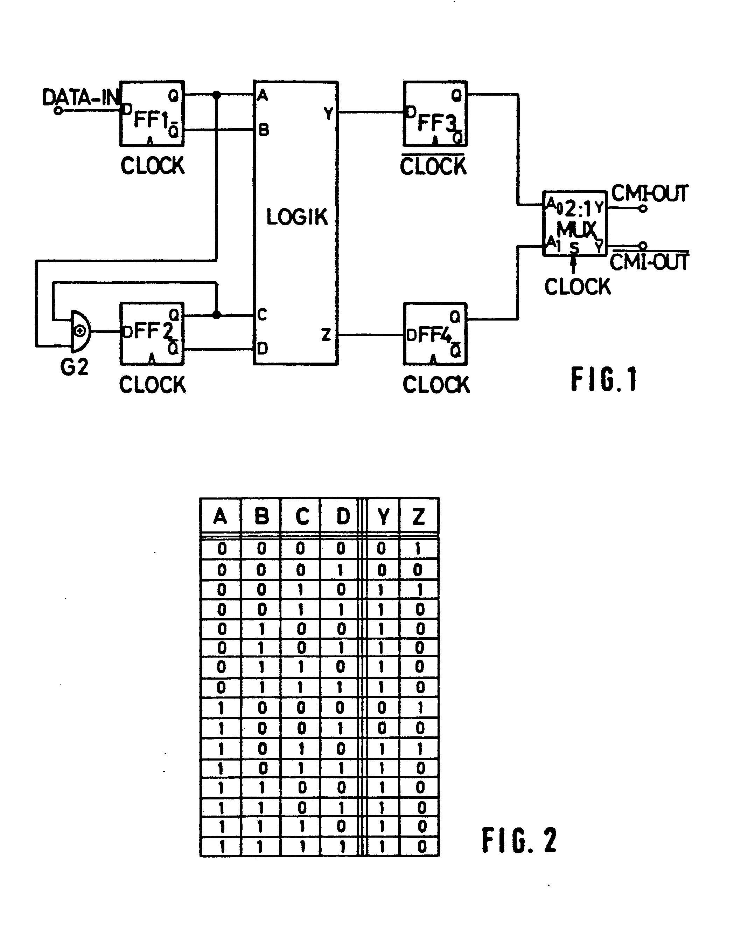

Es folgt die Beschreibung der Erfindung anhand der Figuren. Die Figur 1 zeigt die grundsätzliche Schaltungsanordnung mit den beiden D-Flip-Flop-Paaren und der sie verbindenden Logik.

In der Figur 2 ist die Wahrheitstabelle für diese Logik aufgezeichnet.

Die Figuren 3 bis 6 zeigen verschiedene Realisierungen der Logik, und in den Figuren 7 und 8 sind Impulsdiagramme für die Schaltungsanordnungen nach Figur 3, 5, 6 bzw. Figur 4 gezeichnet.

In Figur 9 ist eine einfache Regelschaltungsanordnung zum Erhalt einer hohen Taktsymmetrie dargestellt.

In Figur 1 ist die grundsätzliche Schaltungsanordnung des CMI-Codierers mit dem Eingangs-D-Flip-Flop FF1, dem nachgeschalteten zweiten D-Flip-Flop FF2 als rückgekoppelter Binärteiler, mit einer Logik, die aus den vier Ausgangssignalen dieses ersten und zweiten D-Flip-Flops zwei Ansteuersignale für die nachfolgenden D-Flip-Flops FF3 und FF4 erzeugt, und einen Multiplexer MUX, der von diesen beiden letzten Flip-Flops jeweils ein Ausgangssignal abwechselnd im Zeitvielfach multiplext.

Der Binärteiler ist derart rückgekoppelt, daß er seinen Ausgangszustand bei binären Daten-Einsen ändert, bei binären Daten-Nullen aber beibehält. In der Schaltung nach Figur 1 ist dies mit einem ausschließenden ODER-Glied realisiert, das am Eingang D des zweiten D-Flip-Flops liegt und dessen beiden Eingänge mit den Normalausgängen Q1, Q2 des ersten und zweiten D-Flip-Flops verbunden sind. Selbstverständlich sind auch andere äquivalente Ausführungsformen je nach ausgewählter Technologie möglich.

Die Logik muß der Wahrheitstabelle nach Figur 2 oder den logischen Gleichungen

$$Y = B \lor C \qquad\qquad (1) \text{ und}$$

$$\overline{Z} = \overline{B \lor D} \qquad\qquad (2)$$

oder umgeformt nach de Morgan

$$\overline{Y} = \overline{A} \land D \qquad\qquad (3) \text{ und}$$
$$Z = \overline{A} \land C \qquad\qquad (4) \text{ genügen,}$$
wobei

$$A = Q1\,(t) = \overline{DATA\text{-}IN\,(t\text{-}1)}$$

$$B = \overline{Q1\,(t)}$$
$$C = Q2\,(t) = Q1\,(t\text{-}1) \oplus Q2\,(t\text{-}1) \qquad \text{und}$$

$$D = \overline{Q2\,(t)} \qquad\qquad\qquad \text{jeweils}$$

in Abhängigkeit des Schrittaktes t ist.

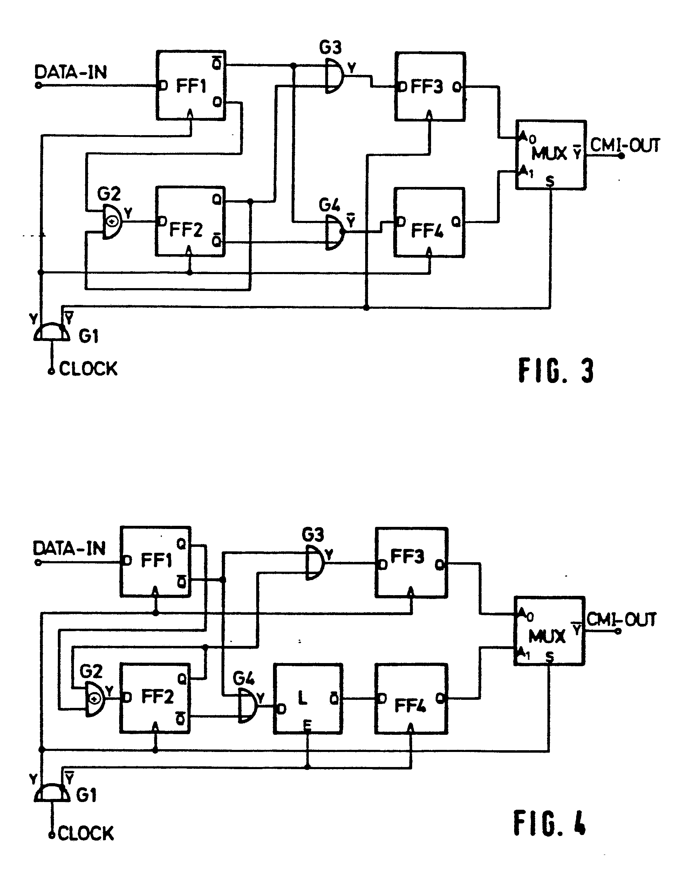

In Figur 3, die im Prinzip die gleiche Anordnung wie Figur 1 zeigt, ist die Logik durch ein ODER-Glied G3 und ein negierendes ODER-Glied G4 gemäß der Gleichungen (1) und (2) realisiert, wobei die ersten Eingänge mit dem invertierenden Ausgang Q des ersten D-Flip-Flops FF1 und die zweiten Eingänge mit dem Normalausgang Q bzw. mit dem invertierten Ausgang Q des zweiten D-Flip-Flops FF2 verbunden sind. Die Ausgänge der ODER-Glieder sind jeweils mit dem D-Eingang des dritten Flip-Flops FF3 und vierten D-Flip-Flops FF4 verbunden. Im Unterschied zu Figur 1 ist der Multiplexer mit dem negierten Takt getaktet, so daß das Ausgangssignal CMI-OUT an seinem negierten Ausgang Y abnehmbar ist. Der negierte Takt ist über ein weiteres ODER-Glied G1 erzeugbar, an dessen Eingang das Taktsignal CLOCK angelegt ist und das über einen invertierenden Y und über einen Normalausgang Y verfügt, an denen die Taktsignale für die Flip-Flops und den Multiplexer abgegriffen werden. Auf diese Weise erfahren beide Taktsignale die gleiche Verzögerung, was Voraussetzung ist für ein fehlerloses Arbeiten auch bei höchsten Frequenzen.

Bei höheren Taktfrequenzen führt der Schaltungspfad vom ersten Flip-Flop über das ODER-Glied G3 zum dritten Flip-Flop zu Laufzeitproblemen, da diese beiden Flip-Flops nur um eine halbe Taktperiode verschoben getaktet werden. Dieses Problem ist in der Anordnung nach Figur 4, die im Prinzip ebenfalls derjenigen nach Figur 1 oder 3 gleicht, gelöst, wobei die Taktverschiebung zwischen erstem und drittem Flip-Flop eine ganze Taktperiode beträgt. Das wird erreicht, indem anstelle der Invertierung durch das ODER-Gatter G4 ein invertierendes Latch L vor dem Eingang des vierten Flip-Flops eingefügt wird und wobei das vierte Flip-Flop und das Latch mit dem invertierten Takt und die anderen Flip-Flops mit dem nichtinvertierten Takt getaktet werden. Durch diese Verbesserung liegt also zwischen zwei aufeinanderfolgenden Flip-Flops mindestens eine ganze Taktperiode, so daß diese Anordnung noch bei einer etwa um den Faktor 2 grösseren Taktrate als derjenigen bei der Anordnung nach Figur 3 fehlerlos arbeitet.

Der Vorteil der beiden Ausführungs-Beispiele nach Figur 3 und 4 liegt darin, daß die anstehenden Daten und die verschiedenen internen Schaltungsstrukturen jeweils mit dem Systemtakt synchron getaktet werden, und daß keine Laufzeitglieder benötigt werden. Das Tastverhältnis des CMI-Codierer-Ausgangssignals hängt lediglich vom Takt selbst und von dem Multiplexer MUX ab. Sofern der Multiplexer in ECL-Technologie realisiert ist, bei der die Laufzeiten der positiven und negativen Flanke gleich groß sind, ist ein symmetrischer Ausgang mit den harten Forderungen nach CCITT-Empfehlungen ohne Mühe realisierbar.

Selbstverständlich sind die ODER-Glieder der Ausführungsbeispiele nach Figur 3 bzw. 4 nach den Regeln von De Morgan in äquivalenter Form durch UND-Glieder oder negierte UND-Glieder ersetzbar. Je nach Technologie können auch verdrahtete ODER-Schaltungen bzw. verdrahtete UND-Schaltungen eingesetzt werden, wodurch die beiden Glieder G3 und G4 eingespart werden können. Bei Einsatz von verdrahteten ODER- bzw. verdrahteten UND-Schaltungen kann die Betriebsfrequenz erheblich gesteigert werden.

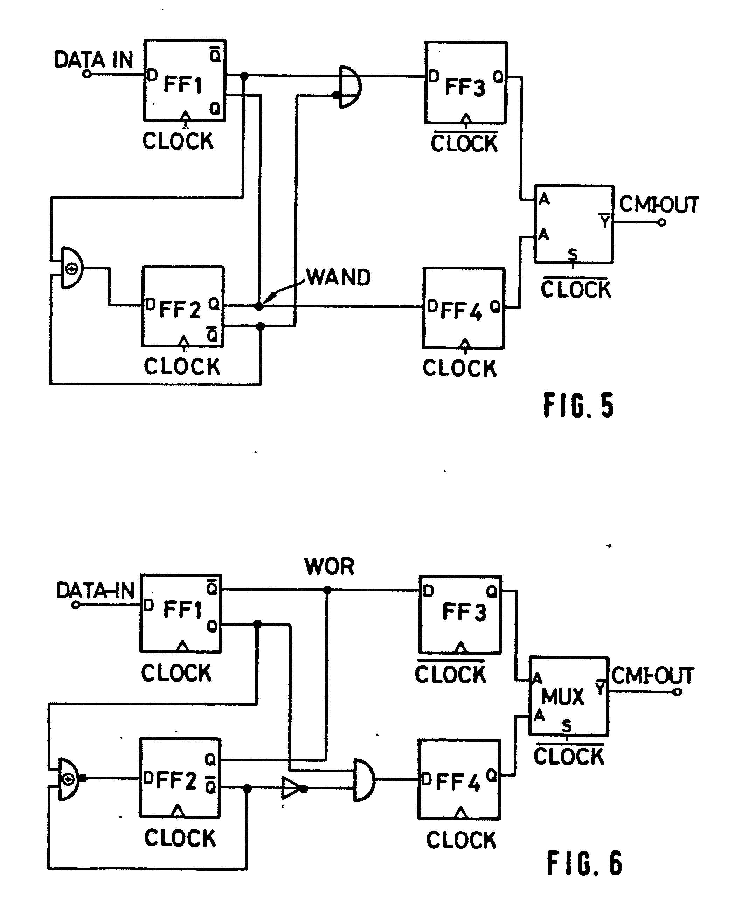

Die Schaltung nach Figur 5 zeigt die Ansteuerung des vierten D-Flip-Flops mit einem verdrahteten UND(WAND), welches Q1 und Q2 verknüpft, gemäß Gleichung (4) und die Ansteuerung des dritten D-Flip-Flops mit einem ODER-Glied, das Q1 und Q2 negiert verknüpft gemäß Gleichung (2). Diese Anordnung wird bei Verwendung der TTL-Technologie realisierbar. Die Beaufschlagung der Eingänge des den Binärteiler FF2 rückkoppelnden ausschließenden ODER-Gliedes erfolgt hier durch die negierten Ausgänge $\bar{Q}1$ und $\bar{Q}2$.

In der Anordnung nach Figur 6 sind die Gleichung (1) durch ein verdrahtetes ODER(WOR), durch das $\bar{Q}1$ und Q2 verknüpft werden, und durch ein UND-Glied die Gleichung (4) realisiert, wobei A=Q1 und D=$\bar{Q}2$=$\bar{C}$, mittels Inverter negiert (C), verknüpft werden. An den Eingängen des den Binärteiler rückkoppelnden ausschließenden ODER-Gliedes sind hier die Flip-Flop-Ausgänge Q1 und $\bar{Q}2$ angeschlossen, weshalb der negierte Ausgang dieses EXOR auf den Eingang des zweiten D-Flip-Flops geführt ist.

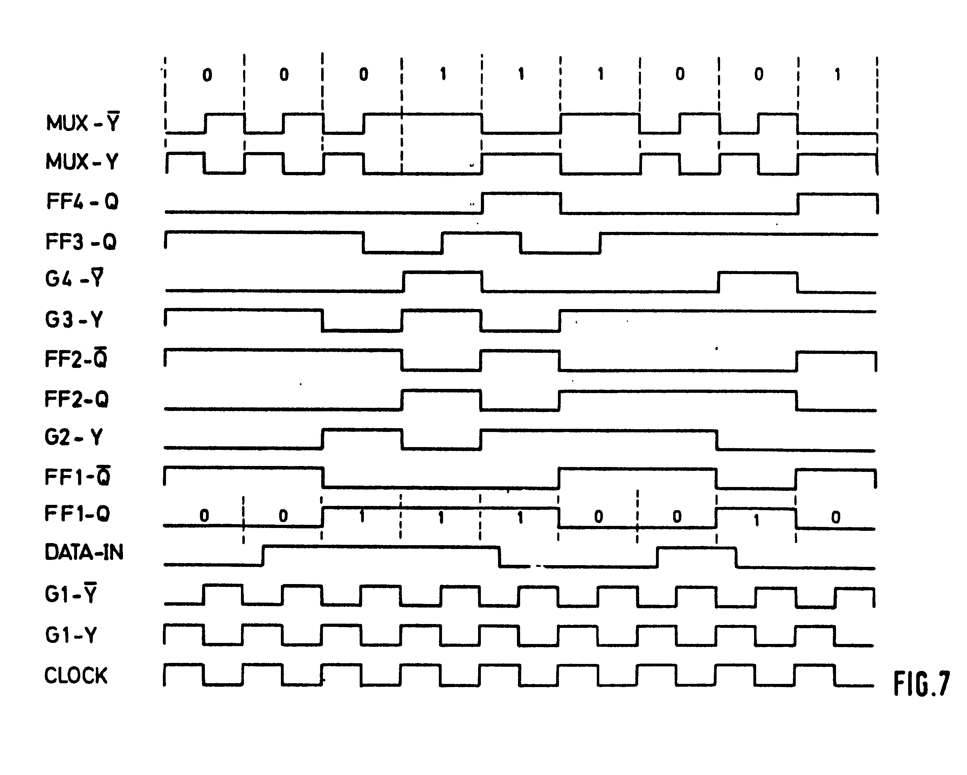

Die Figur 7 zeigt das Impulsdiagramm zur Anordnung nach Figur 3. Das ODER-Glied G1 mit Normalausgang Y und negiertem Ausgang $\bar{Y}$ dient als Takttreiber und zur Erzeugung der beiden um die halbe Taktperiode versetzten Takte. Die Eingangsdaten werden durch das erste D-Flip-Flop FF1 über seinen Normalausgang Q in Normalform und über seinen invertierenden Ausgang $\bar{Q}$ in invertierter Form zur Verfügung gestellt. Die ausschließende ODER-Schaltung G2 ändert nach jeder binären Daten-Eins den Ausgangszustand. Eine binäre Daten-Null führt zu keiner Zustandsänderung an dem Ausgang Y des ausschließenden ODER-Gliedes G2. Die beiden invertierenden Ausgänge der ersten beiden D-Flip-Flops FF1, FF2 werden durch das negierende ODER-Glied G4 und der Normalausgang Q des zweiten D-Flip-Flops FF2 im ODER-Glied G3 mit dem negierten Ausgang $\bar{Q}$ des ersten Flip-Flops FF1 verknüpft. Die Ausgänge dieser beiden ODER-Glieder G3 und G4 werden über das dritte D-Flip-Flop FF3 bzw. über das vierte D-Flip-Flop FF4 an die beiden Multiplexereingänge A0 und A1 geführt. An dem Steuereingang S des Multiplexers MUX liegt der invertierte Systemtakt an. Am invertierten Ausgang $\bar{Y}$ des Multiplexers kann das CMI-codierte Datensignal abgenommen werden.

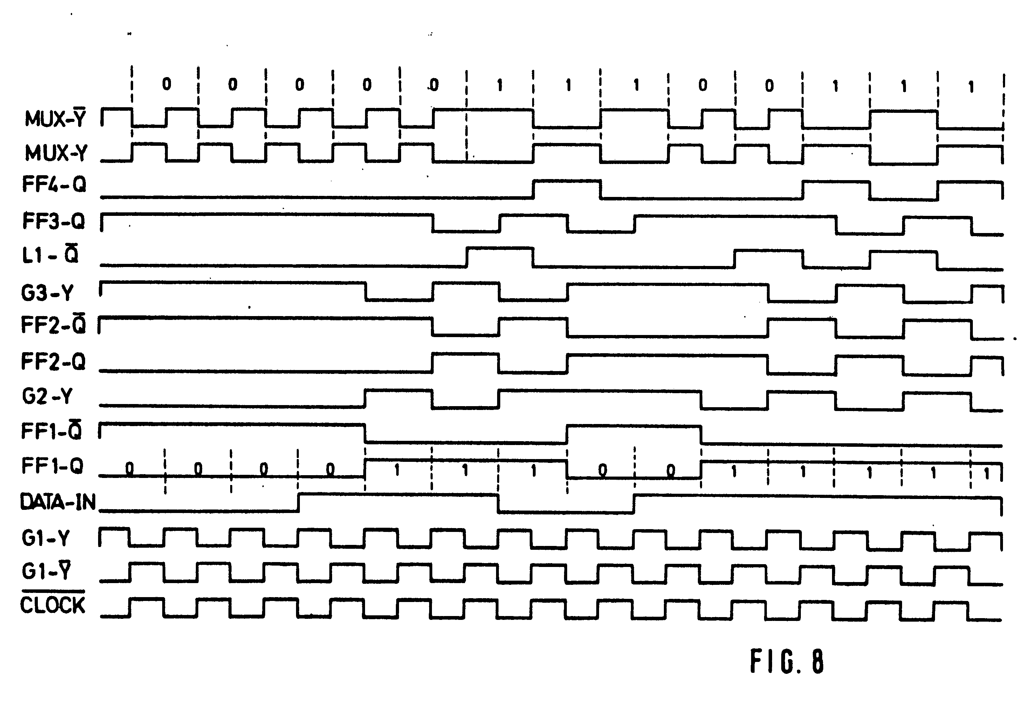

In Figur 8 ist das Impulsdiagramm zugehörig zu der Figur 4 dargestellt, es unterscheidet sich von dem Impulsdiagramm nach Figur 7 lediglich dadurch, daß durch das Latch L das Ausgangssignal des ODER-Gliedes G4 eine halbe Taktperiode nach der Ausgängsänderung des ersten bzw. zweiten D-Flip-Flops übernommen und für eine ganze Taktperiode bis zur Übernahme durch das vierte D-Flip-Flop zwischengespeichert wird und daß sich dadurch und durch die Taktung des dritten D-Flip-Flops sowie des Multiplexers mit dem nichtinvertierten Systemtakt eine Phasendifferenz zwischen dem CMI-Ausgangssignal und dem Datensignal von anderthalb Taktperioden ergibt.

Die Verbesserung wird also erreicht durch Einfügen des Latches L vor dem Eingang des vierten D-Flip-Flops F4, welches Latch die invertierende Funktion des davorliegenden ODER-Gliedes G4 übernimmt. Dieses Latch wird ebenso wie das nachfolgende vierte D-Flip-Flop mit dem invertierten Takt getaktet, wobei während der High-Phase des invertierten Taktes am Enable-Eingang des Latches L dieses Latch für diese Zeit transparent macht und die Ausgangsänderung des davorliegenden ODER-Gliedes G4 eine halbe Taktperiode später an das nachfolgende vierte D-Flip-Flop durchreicht und bis zur nächsten High-Phase des invertierten Taktes speichert. Auf diese Weise wird erreicht, daß zwischen zwei aufeinanderfolgenden Flip-Flop-Stufen jeweils mindestens eine Verschiebung von einer ganzen Taktperiode liegt.

Der CMI-Code ist ein gleichanteilfreier Code, sofern ein Tastverhältnis von genau 1:1 eingehalten wird. Durch den Multiplexer wird die Symmetrie nicht oder kaum beeinträchtigt. Die Gleichanteilfreiheit hängt also letzten Endes lediglich von der Symmetrie des Taktsignals ab.

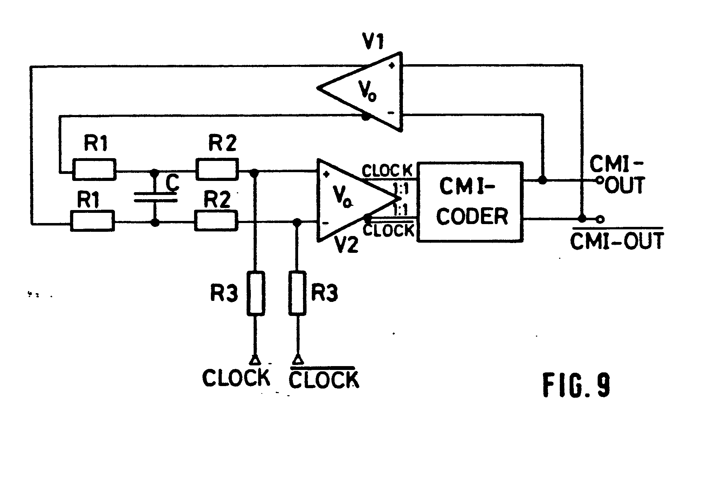

Die Schaltungsanordnung nach Figur 9 gibt an, wie man einen auf höchste Symmetrie getrimmten, geregelten Takt erhält. Dazu wird mittels eines ersten Differenz-Verstärkers V1 die Differenz aus dem CMI-Ausgangssignal CMI-OUT und seinem invertierten, $\overline{\text{CMI-OUT}}$, gebildet und über einen beispielsweise symmetrischen Tiefpaß R1, C, R2 geführt. Das invertierte $\overline{\text{CLOCK}}$ und nicht invertierte Taktsignal CLOCK wird über Entkoppelwiderstände R3 auf das Tiefpaßausgangssignal addiert und das Summensignal auf einen zweiten Differenz-Verstärker V2 gekeben, von dessen invertiertem und Normal-Ausgang hochsymmetrische Taktsignale CLOCK bzw. $\overline{\text{CLOCK}}$ 1:1 entnehmbar und dem CMI-Coder zuführbar sind. Die Regelgenauigkeit der Schleifenanordnung ist um so höher, je höher die Verstärkung $V_0$ der Differenzverstärker ist.

Die erfindungsgemäßen CMI-Codierschaltungen lassen sich vorteilhafterweise separat oder zusammen mit anderen Schaltungsanordnungen in integrierten Schaltkreisen realisieren.

## Patentansprüche

1. CMI-Codierer mit einem ersten D-Flip-Flop (FF1), dessen D-Eingang der Codierereingang ist, und weiteren D-Flip-Flops, wobei das zweite D-Flip-Flop (FF2) ein dem ersten D-Flip-Flop (FF1) nachgeschalteter, rückgekoppelter Binärteiler ist, der seinen Ausgangszustand bei binären Daten-Einsen ändert und bei binären Daten-Nullen beibehält, und wobei die Ausgangssignale der D-Flip-Flops logisch miteinander verknüpft sind, dadurch gekennzeichnet, daß ein Multiplexer (MUX) vorgesehen ist, daß die Ausgangssignale Q1, $\overline{\text{Q}}$1, Q2, $\overline{\text{Q}}$2 der beiden ersten D-Flip-Flops (FF1, FF2) mittels logischer Verknüpfungsglieder logisch verknüpft werden nach der Vorschrift

$$Y = B \vee C \qquad (1) \text{ und}$$

$$\overline{Z = B \vee D} \qquad (2), \text{ wobei}$$

$Q1 (t) = \text{DATA-IN} (t-1)$
$B = Q1 (t)$
$C = Q2 (t) = QI (t-1) \oplus Q2 (t-1)$ und
$D = Q2 (t)$

jeweils in Abhängigkeit d. Schrittaktes ist, oder nach einer zu dieser Vorschrift äquivalenten, durch Anwendung der de Morgan'schen Regeln erhaltenen Gleichungen-Vorschrift, daß die Ausgangssignale (Y, Z) dieser Verknüpfungsglieder jeweils dem Eingang des dritten und vierten D-Flip-Flops (FF3, FF4) zugeführt sind,

daß eines dieser letzten D-Flip-Flops (FF3 oder FF4) mit dem invertierten Systemtakt ($\overline{\text{CLOCK}}$) getaktet wird, während die anderen D-Flip-Flops mit dem nichtinvertierten Takt (CLOCK) getaktet werden,

daß ein Ausgang des dritten und vierten D-Flip-Flops jeweils auf einen der beiden Eingänge (A0, A1) des durch den Systemtakt synchronisierten Multiplexers (MUX) geschaltet sind und

daß dem Ausgang (Y) des Multiplexers (MUX) das CMI-Ausgangssignal (CMI-OUT) entnehmbar ist.

2. CMI-Codierer nach Anspruch 1, dadurch gekennzeichnet, daß die Rückkopplung des Binärteilers von seinem Normalausgang (Q) auf den einen Eingang eines ausschließendes ODER-Gliedes (G2) erfolgt, dessen anderer Eingang mit dem Normalausgang (Q) des ersten D-Flip-Flops (FF1) verbunden ist.

3. CMI-Codierer nach Anspruch 1 oder 2, dadurch gekennzeichnet, daß als erstes logisches Verknüpfungsglied ein ODER-Glied (G3) vorgesehen ist, dessen Eingänge mit dem negierten Ausgang $\overline{\text{Q}}$ des ersten D-Flip-Flops (FF1) und mit dem Normalausgang Q des zweiten D-Flip-Flops (FF2) verbunden ist,

daß als zweites logisches Verknüpfungsglied ein invertierendes ODER-Glied (G4) vorgesehen ist, dessen Eingänge mit dem invertierten Ausgang ($\overline{\text{Q}}$) des ersten D-Flip-Flops (FF1) und mit dem invertierten Ausgang ($\overline{\text{Q}}$) des zweiten D-Flip-Flops (FF2) verbunden sind und

daß das dritte D-Flip-Flop (FF3) und der Multiplexer (MUX) mit dem invertierten Takt ($\overline{\text{CLOCK}}$) getaktet sind.

4. CMI-Codierer nach Anspruch 1 oder 2, dadurch gekennzeichnet, daß als logisches Verknüpfungsglied ein ODER-Glied (G3) vorgesehen ist, dessen Eingänge mit dem negierten Ausgang ($\overline{\text{Q}}$) des ersten D-Flip-Flops (FF1) und dem Normalausgang (Q) des zweiten D-Flip-Flops (FF2) verbunden sind,

daß als zweites logisches Verknüpfungsglied ein zweites ODER-Glied (G4) vorgesehen ist, dessen Eingänge mit dem negierten Ausgang ($\overline{\text{Q}}$) des ersten D-Flip-Flops (FF1) und dem negierten Ausgang ($\overline{\text{Q}}$) des zweiten D-Flip-Flops (FF2) verbunden sind,

daß ein invertierendes Latch (L) zwischen dem Ausgang (Y) des weiteren ODER-Gliedes (G4) und dem Eingang des vierten D-Flip-Flops (FF4) vorgesehen ist und daß das Latch und das vierte D-Flip-Flop mit dem invertierten Takt ($\overline{\text{CLOCK}}$) getaktet sind.

5. CMI-Codierer nach Anspruch 1 oder 2, dadurch gekennzeichnet, daß als erstes logisches Verknüpfungsglied ein ODER-Glied vorgesehen ist, dessen erster Eingang mit dem negierten Ausgang ($\overline{\text{Q}}$) des ersten D-Flip-Flops (FF1) und dessen zweiter negierender Eingang mit dem invertierten Ausgang ($\overline{\text{Q}}$) des zweiten D-Flip-Flops (FF2) und dessen Ausgang mit dem Eingang des dritten D-Flip-Flops (FF3) verbunden sind gemäß Gleichung (1),

daß als zweites logisches Verknüpfungsglied ein verdrahtetes UND(WAND) vorgesehen ist, durch das die beiden Normalausgänge (Q) des ersten und zweiten D-Flip-Flops (FF1, FF2) zusammengefaßt auf den Eingang des vierten D-Flip-Flops (FF4) geführt sind, und

daß das dritte D-Flip-Flop (FF3) und Multiplexer (MUX) durch den negierten Takt (C̄L̄Ō C̄K̄) getaktet sind.

6. CMI-Codierer nach Anspruch 1 oder 2, dadurch gekennzeichnet, daß als erstes logisches Verknüpfungsglied ein verdrahtetes ODER(WOR) vorgesehen ist, durch welches der invertierte (Q̄) Ausgang des ersten D-Flip-Flops (FF1) und der Normalausgang (Q) des zweiten D-Flip-Flops (FF2) zusammengefaßt und auf den Eingang des dritten D-Flip-Flops (FF3) geführt sind nach Gleichung (1),

daß als zweites logisches Verknüpfungsglied ein UND-Glied vorgesehen ist, durch welches der Normalausgang (Q) des ersten D-Flip-Flops (FF1) und der invertierte Ausgang (Q̄) des zweiten D-Flip-Flops (FF2), mittels Inverter invertiert, verknüpft und auf den Eingang des vierten D-Flip-Flops (FF4) geführt ist und

daß drittes D-Flip-Flop (FF3) und Multiplexer (MUX) durch den invertierten Takt (C̄L̄Ō C̄K̄) getaktet sind.

7. CMI-Codierer nach einem der vorhergehenden Ansprüche, dadurch gekennzeichnet, daß ein ODER-Glied (G1) mit invertierendem (Ȳ) und nicht invertierendem Ausgang (Y) vorgesehen ist, an dessen Eingang oder an dessen beiden Eingängen der Takt (CLOCK) angeschlossen ist.

8. CMI-Codierer nach einem der vorhergehenden Ansprüche, gekennzeichnet durch Realisierung in einem integrierten Schaltkreis zusammen mit anderen Schaltungsanordnungen oder separat.

9. CMI-Codierer nach einem der vorhergehenden Ansprüche, dadurch gekennzeichnet, daß aus dem invertierten (C̄M̄Ī-Ō Ū T̄) und dem nicht invertierten CMI-Ausgangssignal (CMI-CUT) ein Differenzsignal gebildet wird, welches integriert und auf das Takt-(CLOCK) bzw. auf ein davon abgeleitetes Signal und gegenphasig auf das invertierte Takt-(C̄L̄Ō C̄K̄) bzw. auf ein davon abgeleitetes Signal addiert wird, und

daß die so gebildeten Summensignale den beiden Eingängen eines Differenzverstärkers (V2) hoher Verstärkung zugeführt werden, an dessen invertierendem (C̄L̄Ō C̄K̄ 1 : 1) und nicht invertierendem Ausgang (CLOCK 1 : 1) die zueinander gegenphasigen Taktsignale zur Taktung des CMI-Codierers abgreifbar sind.

10. CMI-Codierer nach Anspruch 9, dadurch gekennzeichnet, daß zur Bildung des Differenzsignals ein Differenzverstärker (V1) hoher Verstärkung mit Normal- und invertierendem Ausgang vorgesehen ist,

daß die Integration mittels symmetrischem Tiefpaß (R1, C, R2) erfolgt und

daß die Addition auf die vom Takt mittels Entkopplungswiderständen (R3) abgeleiteten Signale erfolgt.

## Claims

1. Code-mark inversion coder with a first D-flip-flop (FF1), the D-input of which is the coding input, and further D-flip-flops, wherein the second D-flip-flop (FF2) is a binary divider, which is connected behind the first D-flip-flop (FF1), is provided with feedback and which changes its output stage for binary date ones and maintains it for binary data zeros, and wherein the output signals of the D-flip-flops are one logically interlinked with the other, characterised thereby, that a multiplexer (MUX) is provided, that the output signals Q1, Q̄1, Q2, Q̄2 of both the first D-flip-flops (FF1, FF2) are logically interlinked by means of logic interlinking members according to the instruction

$$Y = B \lor C \qquad (1) \text{ and}$$
$$Z = B \lor D \qquad (2), \text{ wherein}$$
$$Q1\,(t) = DATA\text{-}IN\,(t\text{-}1)$$
$$B = Q1\,(t)$$
$$C = Q2\,(t) = Q1\,(t\text{-}1) \oplus Q2\,(t\text{-}1) \qquad \text{and}$$
$$D = Q2\,(t),$$

each time in dependence on the stepping pulse or according to an equation instruction which is equivalent to this instruction and obtained through application of the de Morgan rules, that the output signals (Y,Z) of these interlinking members are conducted respectively to the input of the third and fourth D-flip-flop (FF3, FF4), that one of these latter D-flip-flops (FF3 or FF4) is pulsed by the inverted system pulse (C̄L̄Ō C̄K̄), whilst the other D-flip-flops are pulsed by the non-inverted timing pulse (CLOCK), that an output of the third and fourth D-flip-flop is respectively connected to one of both the inputs (A0, A1) of the multiplexer (MUX) synchronised by the system pulse and that the code-mark-inversion output signal (CMI-OUT) is derivable from the output (Z) of the multiplexer (MUX).

2. Code-mark inversion coder according to claim 1, characterised thereby, that the feed back of the binary divider takes place from its normal output (Q) to the one input of an exclusive OR-member (G2), the other input of which is connected with the normal output (Q) of the first D-flip-flop (FF1).

3. Code-mark inversion coder according to claim 1 or 2, characterised thereby, that an OR-member (G3), the inputs of which are connected with the negated output (Q̄) of the first D-flip-flop (FF1) and with the normal output (Q) of the second D-flip-flop (FF2), is provided as first logic interlinking member, that an inverting OR-member (G4), the inputs of which are connected with the inverted output (Q̄) of the firet D-flip-flop (FF1) and with the inverted output (Q̄) of the second D-flip-flop (FF2), is provided as second logic interlinking member and that the third D-flip-flop (FF3) and the multiplexer (MUX) are pulsed by the inverted timing pulse ($\overline{\text{CLOCK}}$).

4. Code-mark inversion coder according to claim 1 or 2, characterised thereby, that an OR-member (G3), the inputs of which are connected with the negated output ($\overline{\text{Q}}$) of the first D-flip-flop (FF1) and with the normal output (Q) of the second D-flip-flop (FF2), is provided as first logic interlinking member, that a second OR-member (G4), the inputs of which are connected with the negated output ($\overline{\text{Q}}$) of the first D-flip-flop (FF1) and with the negated output ($\overline{\text{Q}}$) of the second D-flip-flop (FF2), is provided as second logic interlinking member, that an inverting latch (L) is provided between the output (Y) of the further OR-member (G4) and the input of the fourth D-flip-flop (FF4) and that the latch and the fourth D-flip-flop are pulsed by the inverted timing pulse ($\overline{\text{CLOCK}}$).

5. Code-mark inversion coder according to claim 1 or 2, characterised thereby, that an OR-member, the first input of which is connected with the negated output ($\overline{\text{Q}}$) of the first D-flip-flop (FF1) and the second negating input of which is connected with the inverted output ($\overline{\text{Q}}$) of the second D-flip-flop (FF2) and the output of which is connected with the input of the third D-flip-flop (FF3) according to equation (1), is provided as first logic interlinking member, that a wired AND (WAND), through which both the normal outputs (Q) of the first and second D-flip-flops (FF1, FF2) are together conducted to the input of the fourth D-flip-flop (FF4), is provided as second logic interlinking member and that the third D-flip-flop (FF3) and the multiplexer (MUX) are pulsed by the inverted timing pulse ($\overline{\text{CLOCK}}$).

6. Code-mark inversion coder according to claim 1 or 2, characterised thereby, that a wired OR(WOR), through which the inverted output (Q) of the first D-flip-flop (FF1) and the normal output (Q) of the second D-flip-flop (FF2) are combined and conducted to the input of the third D-flip-flop (FF3) according to equation (1), is provided as first logic interlinking member, that an AND-member, through which the normal output (Q) of the first D-flip-flop (FF1) and the inverted output (Q) of the second D-flip-flop (FF2), inverted by means of inverter, are interlinked and conducted to the input of the fourth D-flip-flop (FF4), is provided as second logic interlinking member and that the third D-flip-flop (FF3) and the multiplexer (MUX) are pulsed by the inverted timing pulse ($\overline{\text{CLOCK}}$).

7. Code-mark inversion coder according to one of the preceding claims, characterised thereby, that an OR-member (G1) with inverting output ($\overline{\text{Y}}$) and non-inverting output (Y) is provided, at the input of which or at both inputs of which the timing pulse (CLOCK) is connected.

8. Code-mark inversion coder according to one of the preceding claims characterised by realisation in an integrated switching circuit either separately or together with other circuit arrangements.

9. Code-mark inversion coder according to one of the preceding claims, characterised thereby, that a difference signal is formed from the inverted code-mark-inversion output signal ($\overline{\text{CMI-OUT}}$) and the non-inverted code-mark-inversion output signal (CMI-OUT), is integrated and added to the timing signal (CLOCK) or to a signal derived therefrom and in opposite phase to the inverted timing signal ($\overline{\text{CLOCK}}$) or to a signal derived therefrom and that the thus formed sum signals are conducted to both the inputs of a differential amplifier (V2) of high amplification, at the inverting output ($\overline{\text{CLOCK}}$ 1 : 1) and the non-inverting output (CLOCK 1 : 1) of which the timing pulse signals of mutually opposite phase are derivable for the pulsing of the code-mark inversion coder.

10. Code-mark inversion coder according to claim 9, characterised thereby, that a differential amplifier (V1) of high amplification with normal output and inverting output is provided for the formation of the difference signal, that the integration takes place by means of a symmetrical low-pass filter (R1, C, R2) and that the addition takes place onto the signals derived by means of decoupling resistors (R3) from the timing pulse.

**Revendications**

1. Codeur CMI comportant une première bascule D (FF1) dont l'entrée D est l'entrée du codeur, et d'autres bascules D, la deuxième bascule D (FF2) étant un diviseur binaire rétrocouplé, qui suit la première bascule D (FF1) et dont l'état de sortie varie pour des données binaires "un" et reste inchangé pour des données binaires ""zéro", les signaux de sortie des bascules D étant mutuellement combinés logiquement, caractérisé par le fait qu'il est prévu un multiplexeur (MUX),

par le fait que les signaux de sortie (Q1, $\overline{\text{Q}}$1, Q2, $\overline{\text{Q}}$2) des deux premières bascules D (FF1, FF2) sont combinés logiquement au moyen d'éléments de combinaison logiques, selon la spécification

$Y = B \vee C$ (1) et
$Z = B \vee D$ (2), avec
$Q1(t) = \text{DATA-IN}(t-1)$
$B = Q1(t)$
$C = Q2(t) = Q1(t-1) \oplus Q2(t-1)$ et
$D = Q2(t)$

dépendant à chaque fois du cadencement pas à pas,

ou selon une spécification équivalente à celle-ci, obtenue par application des règles de De Morgan,

par le fait que les signaux de sortie (Y, Z) de ces éléments de combinaison sont amenés à chaque fois a l'entrée de la troisième et de la quatrième bascule D (FF3, FF4),

par le fait que l'une de ces dernières bascules D (FF3 ou FF4) est cadencée par le signal d'horloge inversé (HŌRLŌGĒ) du système, tandis que les autres bascules D sont cadencées par le signal d'horloge (HORLOGE) non inversé,

par le fait que la troisième et la quatrième bascule D ont chacune une sortie appliquée à l'une des deux entrées (A0, A1 du multiplexeur (MUX) synchronisé par le signal d'horloge du système, et

par le fait que le signal de sortie CMI (CMI-OUT) peut être prélevé à la sortie (Y) du multiplexeur (MUX).

2. Codeur CMI selon revendication 1, caractérisé par le fait que le rétrocouplage du diviseur binaire s'effectue de sa sortie normale (Q) à la première entrée d'un élément OU-exclusif (G2) dont l'autre entrée est reliée à la sortie normale (Q) de la première bascule D (FF1),

3. Codeur CMI selon revendication 1 ou 2, caractérisé par le fait qu'un élément OU (G3) est prévu en tant que premier élément de combinaison logique, ses sorties étant reliées à la sortie inversee Q̄ de la première bascule D (FF1) et la sortie normale Q de la deuxièume bascule D (FF2),

par le fait qu'un deuxième élément OU inversant (G4) est prévu en tant que deuxième élément de combinaison logique, ses sorties étant reliées à la sortie inversée (Q̄) de la première bascule D (FF1) et à la sortie inversée (Q̄) de la deuxième bascule D (FF2), et

par le fait que la troisième bascule D (FF3) et le multiplexeur (MUX) sont cadencés par le signal d'horloge inversé (HŌRLŌGĒ),

4. Codeur CMI selon revendication 1 ou 2, caractérisé par le fait qu'un élément OU (G3) est prévu en tant qu'élément de combinaison logique, ses entrées étant reliées à la sortie inversée Q̄ de la première bascule D (FF1) et à la sortie normale (Q) de la deuxième bascule D (FF2),

par le fait qu'un deuxième élément OU (G4) est prévu en tant que deuxième élément de combinaison logique, ses entrées étant reliées à la sortie inversée (Q̄) de la première bascule D (FF1) et à la sortie inversée (Q̄) de la deuxième bascule D (FF2),

par le fait qu'un verrou inversant (L) est prévu entre la sortie (Y) de l'autre élément OU (G4) et l'entrée de la quatrième bascule D (FF4), et par le fait que le verrou et la quatrième bascule D sont cadencés par le signal d'h'olorge inversé (HŌRLŌGĒ).

5. Codeur CMI selon revendication 1 ou 2, caractérisé par le fait qu'un élément OU est prévu en tant que premier élément de combinaison logique, sa première entrée étant reliée à la sortie inversée (Q̄) de la première bascule D (FF1) et sa deuxième entrée inverseuse étant reliée à la sortie inversée (Q̄) de la deuxième bascule D (FF2), et sa sortie étant reliée à l'entrée de la troisième bascule D (FF3), selon équation (1),

par le fait qu'un ET(NON-ET) câblé est prévu en tant de deuxième élément de combinaison logique, par lequel les deux sorties normales (Q) de la première et de la deuxième bascule D (FF1, FF2), prises ensemble, sont amenées à l'entrée de la quatrième bascule D (FF4), et par le fait que la troisième bascule D (FF3) et le multiplexeur (MUX) sont cadencés par le signal d'horloge inversé (HŌRLŌGĒ),

6. Codeur CMI selon revendication 1 ou 2, caractérisé par le fait qu'un OU(NON-OU) câblé est prévu en tant que premier élément de combinaison logique, par lequel la sortie inversée (Q̄) de la première bascule D (FF1) et la sortie normale (Q) de la deuxième bascule D (FF2) sont prises ensemble et amenées à l'entrée de la troisième bascule D (FF3), selon équation (1),

par le fait qu'un élément ET est prévu en tant que deuxième élément de combinaison logique, par lequel la sortie normale (Q̄) de la première bascule D (FF1) et la sortie inversée (Q̄) de la deuxième bascule D (FF2), inversée par inverseur, sont combinées et amenées à l'entrée de la quatrième bascule D (FF4), et

par le fait que la troisème bascule D (FF3) et le multiplexeur (MUX) sont cadencés par le signal d'horloge inversé (HŌRLŌGĒ).

7. Codeur CMI selon l'une des revendications précédentes, caractérisé par le fait qu'il est prévu un élément OU (G1) avec sortie inverseuse (Y̆) et sortie non-inverseuse (Y), à l'entrée duquel ou aux deux entrées duquel est appliqué le signal d'horloge (HORLOGE).

8. Codeur CMI selon l'une des revendications précédentes, caractérisé par une réalisation dans un circuit intégré, conjointement avec d'autres agencements de circuit, ou séparément.

9. Codeur CMI selon l'une des revendications précédentes, caractérisé par le fait qu'un signal de différence est formé à partir du signal de sortie CMI inversé (CMĪ-ŌUT) et du signal de sortie CMI non inversé (CMI-OUT), ce signal de différence étant intégré et additionné au signal d'horloge (HORLOGE) ou respectivement à un signal qui en est dérivé, et additionné en opposition de phase au signal d'holorge inversé (HŌRLŌGĒ) ou respectivement à un signal qui en est dérivé, et

par le fait que les signaux de somme ainsi formés sont amenés aux deux entrées d'un amplificateur différentiel (V2) à grande amplification, aux sorties inverseuse (HŌRLŌGĒ 1: 1) et non-inverseuse (HORLOGE 1 : 1) duquel on peut prélever les signaux d'horloge mutuellement en opposition de phase, pour le cadencement du codeur CMI.

10. Codeur CMI selon revendication 9, caractérisé par le fait que, pour former le signal de différence, il est prévu un amplificateur différentiel (V1) à grande amplification, avec sortie normale et sortie inverseuse,

par le fait que l'intégration s'effectue au moyen d'un filtre passe-bas symétrique (R1, C, R2), et

par le fait que l'addition s'effectue sur les signaux dérivés du signal d'horloge au moyen de résistances de découplage (R3).

**FIG.1**

DATA-IN — FF1 — CLOCK — FF2 — G2 — CLOCK — LOGIK (A, B, C, D → Y, Z) — FF3 — CLOCK — FF4 — CLOCK — 2:1 MUX (A0, A1, S, Y) — CLOCK — CMI-OUT, CMI-OUT

| A | B | C | D | Y | Z |
|---|---|---|---|---|---|
| 0 | 0 | 0 | 0 | 0 | 1 |
| 0 | 0 | 0 | 1 | 0 | 0 |
| 0 | 0 | 1 | 0 | 1 | 1 |
| 0 | 0 | 1 | 1 | 1 | 0 |
| 0 | 1 | 0 | 0 | 1 | 0 |
| 0 | 1 | 0 | 1 | 1 | 0 |
| 0 | 1 | 1 | 0 | 1 | 0 |
| 0 | 1 | 1 | 1 | 1 | 0 |
| 1 | 0 | 0 | 0 | 0 | 1 |
| 1 | 0 | 0 | 1 | 0 | 0 |
| 1 | 0 | 1 | 0 | 1 | 1 |
| 1 | 0 | 1 | 1 | 1 | 0 |
| 1 | 1 | 0 | 0 | 1 | 0 |
| 1 | 1 | 0 | 1 | 1 | 0 |
| 1 | 1 | 1 | 0 | 1 | 0 |
| 1 | 1 | 1 | 1 | 1 | 0 |

**FIG. 2**

FIG. 3

FIG. 4

FIG. 5

FIG. 6

FIG.7

FIG. 8

0144 558

FIG. 9